# EUROPEAN PATENT APPLICATION

(11) **EP 4 844 641 A1**
(43) Date of publication of application: **25.11.2026**
(21) Application number: 26179484.6
(22) Date of filing: 19.05.2026
(51) Int. Cl.: G06N 10/20, G06N 10/40

(54) **QUANTUM PROCESSING ELEMENT, QUANTUM PROCESSING UNIT, QUANTUM CIRCUIT AND METHOD**

(30) Priority: 19.05.2025 FI 20253198
(71) Applicant: Alipour, Sahar, 02630 Espoo (FI); Tayefeh Rezakhani, Ali, 02630 Espoo (FI)
(72) Inventor: Alipour, Sahar, 02630 Espoo (FI); Tayefeh Rezakhani, Ali, 02630 Espoo (FI)
(74) Representative: Boco IP Oy Ab

(57) **Abstract**

A quantum processing element is proposed which comprises a control system in a control state, a quantum signal system and a target system in a target state. The quantum processing element is configured to apply, conditioned on the control state an operation to the target system. The quantum signal system comprises a quantum state, and the operation applied by the quantum processing element to the target system is dictated by the said quantum state. In addition, a quantum circuit for executing the quantum processing element is outlined.

## Description

We introduce *chameleon gates* as a natural generalization of conventional quantum controlled-gates. Chameleon gates are *state-based* quantum controlled-operations, with standard elements such as control and target systems, but most importantly supplemented with the new feature of having a *quantum knob.* This knob is a quantum signal (state) which dictates the shape and form of the gate and what it becomes. That is, what a chameleon gate does and becomes depends on the quantum knob signal and the gate has a variable and dynamic form, which is not necessarily unitary. This *shapeshifting* property is in stark contrast to conventional quantum controlled-gates, whose actions are fixed and cannot be modified. We also propose how chameleon gates can be realized within current quantum technologies by using conventional quantum gates. We then employ this new concept of gates as an essential element to construct a *state-based quantum computation* (SBQC) framework. We demonstrate that SBQC surpasses conventional quantum gates in that it also allows simulation of nonunitary state-dependent (nonlinear) quantum evolutions.

### I. STATE-BASED QUANTUM OPERATIONS

Inspired by gate-based quantum computation, here we extend fixed gates to a new type of quantum gates with varying action which is prescribed by an input state ("quantum knob") to the gate. Due to this varying behavior, which changes according to incoming quantum states or signal, we refer to these gates as the "chameleon gates." These state-dependent gates are used as fundamental building blocks of a "state-based quantum computation" paradigm.

In the standard gate-based quantum computation [1], *fixed* quantum gates U are essential elements of any quantum algorithm. Examples of such gates are the Hadamard gate, *X-, Y-,* and Z-Pauli gates, phase gate *e*^{*-iπZ*/4}, CNOT, SWAP, and controlled-SWAP (Fredkin) gate. Among such gates, controlled-gates such as CNOT and controlled-SWAP have a special standing due to their important properties such as ability to generate quantum entanglement, which is essential for universal quantum computation. Propositions for devising controlled-U gate from any given gate U have already been discussed in the literate [2].

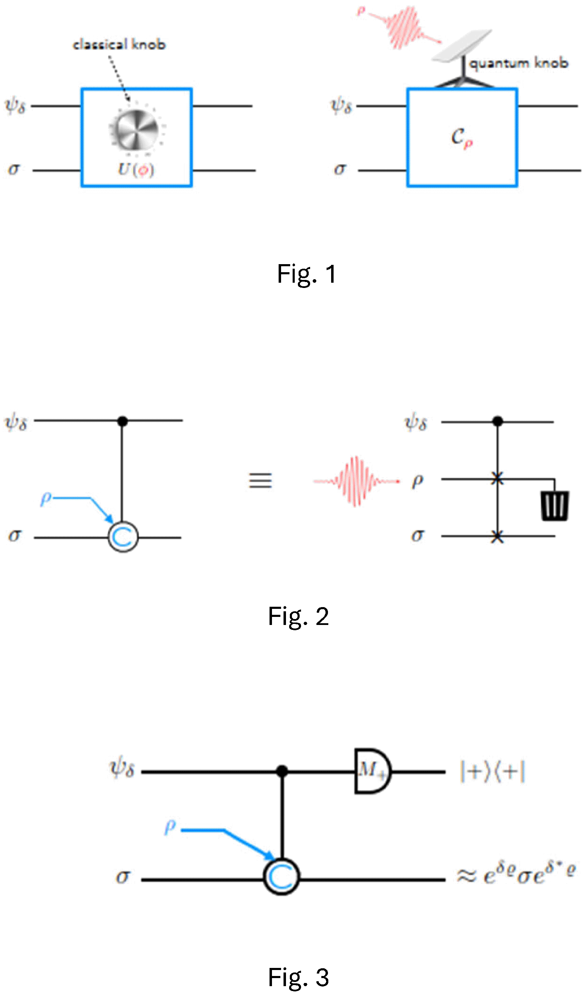

One way to enhance quantum controlled-gates to be more versatile is to make them parameter dependent, i.e., defining controlled-*U*(*ϕ*) gates 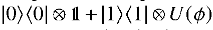 , where *ϕ* is a tunable parameter of the quantum circuit. An example of such gates is the controlled-phase gate, where *ϕ* is a phase shift and *U*(*ϕ*) *= e^{iϕZ}.* The parameter *ϕ* acts as a classical signal or a *classical knob* that modifies the values of the elements of the gate-Fig. 1 [left].

A yet further, natural generalization of such parametrized controlled-gates can be achieved by replacing the scalar parameter *ϕ* by a Hermitian *operator A* such that the unitary quantum gate becomes *U*(*A*). This kind of generalization leads, for example, to the extension of the geometric phase to non-Abelian holonomic phases, where U(A) *= e^{iA}* [3].

Here we introduce a novel class of quantum controlled-gates where the operator A is replaced with a *quantum state p,* which represents a quantum signal acting as a *quantum knob* for the gate. That is, these gates are *state-based* quantum operations whose form are specified by a quantum signal or knob state-Fig. 1 [right]. We later show that this replacement enables utilization of the power of quantum states along with quantum operations in developing new quantum algorithms. The key observation is that in addition to using fixed quantum states as the quantum knobs, we can also use any quantum state from the very quantum circuit itself (or part of the circuit) or we can even use the state of another quantum circuit. This possibility significantly expands the domain of computations from linear dynamics on quantum computers to nonlinear evolutions.

**In** the following, we start with introducing *state-based* controlled-gates and later in Sec. II use them to do state-based quantum computation.

*State-based controlled-gates.-The* action of a state-based controlled-gate 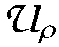 *,* which is not necessarily a unitary gate, resembles an ordinary controlled-p gate if *ρ* were a unitary operator. This means that such a quantum gate has the ability to apply a function of the operator *ρ,* where *ρ* is some quantum state rather than a unitary operation, on any given input target state *σ* in a controlled fashion. Although we can choose any function here, in the following we make this simplification that *ρ* itself acts on the target. If the control qubit is in the state 10), the input target state *σ* remains unchanged, whereas if the control qubit is |1〉, the operation *ρ* is applied on *σ.* This means that the action of 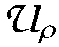 can be described by a bipartite operation as 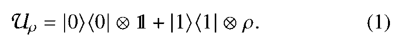 This implies that if the control qubit is in the state ${ψ}_{δ} = \left|{ψ}_{δ}\right〉 \left〈{ψ}_{δ}\right| ,$ (2) 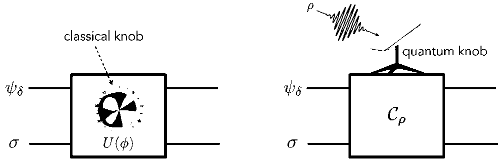 FIG. 1. Comparing conventional parameter-dependent quantum gates controlled-*U*(*ϕ*) with operator-dependent quantum controlled-gates *C_{ρ}.* Both gates are controlled by some *knobs;* while the knob in the left one is *classical* (a parameter *ϕ*), the knob in the right one is *quantum* (an operator, a quantum state/signal *ρ*). Both controlled gates have standard elements such as control and target systems, which here are represented by *ψ_{δ}* and *σ.* For the specific definitions of *ψ_{δ}* and *C_{ρ}* see the main text. 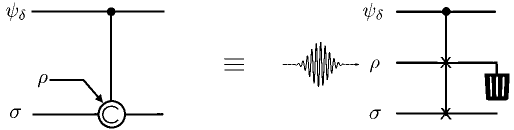 FIG. 2. [Left] Quantum-circuit schematic of a state-based controlled-gate *C_{ρ}*, which we refer to as the chameleon gate [Eq. (6)]. [Right] An equivalent standard gate-based construction is also shown for this gate, which uses a specific combination of quantum states, quantum controlled-SWAP gate, and partial tracing. Note that basically the control qubit can be any state. But when the control qubit is chosen as *ψ_{δ}* with |*δ*| ≪ 1, this also yields an implementation for 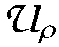 [Eq. (1)] to an *O*(*δ*²) error.
where |*ψ_{δ}*〉 = |0〉+*δ*|1), and we apply 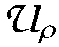 on this control qubit and the target system with state *σ,* we obtain $\begin{matrix}{U}_{ρ} \left({ψ}_{δ}⊗σ\right) {U}_{ρ}^{†} = \left|0\right〉 \left〈0\right| ⊗ σ + δ \left|1\right〉 \left〈0\right| ⊗ ρσ \\ + δ * \left|0\right〉 \left〈1\right| ⊗ σρ + {\left|δ\right|}^{2} \left|1\right〉 \left〈1\right| ⊗ ρσρ .\end{matrix}$ (3) The reason we use this particular *ψ_{δ}* as the state of the control qubit is for later convenience.

*Realization of state-based controlled-gates.-Here* we show how we can realize a state-based operation using basic elements of the standard gate-based quantum computation model. When *δ* ≪ 1 the effect of 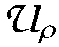 on the control qubit and the target system *σ* can be realized as follows:
- Prepare an ancilla qubit (which will be used later as a control qubit) in the state *ψ_{δ}* [Eq. (2)] with *δ* ≪ 1.
- Prepare a quantum system in the state *ρ* and consider the input target system in the state *σ.*
- Use the ancilla as the control system and the system with state *ρ* as the first target system T₁ and the system with state *σ* as the second target system T₂ and apply a controlled-SWAP gate *U*_{cs} on the control system and the two target systems: $\begin{matrix}{U}_{cs} \left({ψ}_{δ}⊗ρ⊗σ\right) {U}_{cs}^{†} = \left|0\right〉 \left〈0\right| ⊗ ρ ⊗ σ + δ \left|1\right〉 \left〈0\right| ⊗ S \left(ρ⊗σ\right) \\ + δ * \left|0\right〉 \left〈1\right| ⊗ \left(σ⊗ρ\right) S + {\left|δ\right|}^{2} \left|1\right〉 \left〈1\right| ⊗ S \left(ρ⊗σ\right) S ,\end{matrix}$ (4) where S is the swap operation, defined as *S*(*A* ⊗ *B*)*S = B* ⊗ A, VA, *B.*
- Partial trace over the first target system T₁: $\begin{matrix}{Tr}_{{T}_{1}} \left[{U}_{cs}\left({ψ}_{δ}⊗ρ⊗σ\right){U}_{cs}^{†}\right] = \left|0\right〉 \left〈0\right| ⊗ σ + δ \left|1\right〉 \left〈0\right| ⊗ ρσ \\ + δ * \left|0\right〉 \left〈1\right| ⊗ σρ + {\left|δ\right|}^{2} \left|1\right〉 \left〈1\right| ⊗ ρ .\end{matrix}$ (5) The final result of the set of instructions above is equivalent to the action of a state-based controlled-gate 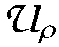 as in Eq. (3) up to *O*(*δ*²), ${Tr}_{{T}_{1}} \left[{U}_{cs}\left({ψ}_{δ}⊗ρ⊗σ\right){U}_{cs}^{†}\right] = {U}_{ρ} \left({ψ}_{δ}⊗σ\right) {U}_{ρ}^{†} + O \left({δ}^{2}\right) .$ Figure 2 depicts these steps. In this figure we also introduce a distinct quantum-circuit symbol for state-based controlled-gates (including the chameleon gates defined below).

An important and interesting feature of this realization is that there is no need to have prior knowledge of the knob state *ρ* in order to apply a 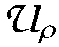 gate. Moreover, the action of the state-based gate is determined according to the given state *ρ*, which itself can be, e.g., the output of some previous step of the algorithm.

*Chameleon gate.*-The complete effective action of the realization process described in the previous section, without ignoring *O*(*δ*²) terms, is given by the following operation: ${C}_{ρ} : \left\{\begin{matrix}\left|0\right〉 \left〈0\right| ⊗ σ & \to & \left|0\right〉 \left〈0\right| ⊗ σ \\ \left|0\right〉 \left〈1\right| ⊗ σ & \to & \left|0\right〉 \left〈1\right| ⊗ σρ \\ \left|1\right〉 \left〈0\right| ⊗ σ & \to & \left|1\right〉 \left〈0\right| ⊗ ρσ \\ \left|1\right〉 \left〈1\right| ⊗ σ & \to & \left|1\right〉 \left〈1\right| ⊗ ρ\end{matrix}\right.$ (6) This defines a new type of state-based quantum controlled-operation which we refer to as a "chameleon gate" or "chameleon element" *C_{ρ}.* It can be verified easily that ${C}_{ρ} \left[{ψ}_{δ}⊗σ\right] = {U}_{ρ} \left({ψ}_{δ}⊗σ\right) {U}_{ρ}^{†} + O \left({δ}^{2}\right) .$ (7) In the case the knob state is similar to the quantum state of either the inputs control or target systems, rather than an independent state, the chameleon gate becomes a nonlinear state-based operation on its inputs.

Further, the proposed realization procedure for chameleon gates/elements allows us to lay out a *chameleon-inside* quantum processing unit (QPU) using existing elements for standard gate-based quantum computation, which in principle can be demonstrated in all current approaches for quantum computation. In particular, one can think of in-chip chameleon elements and using them as building blocks of SBQC.

In the following we demonstrate an application of the chameleon gates for designing SBQC algorithms. We illustrates this through examples.

### II. STATE-BASED QUANTUM COMPUTATION

A (universal) state-based quantum computer uses various quantum states to form suitable chameleon gates for simulation of any quantum evolutions. In this method the given Hamiltonian which generates the dynamics is decomposed in terms of a set of quantum *states-*which we refer to as *resource states.* This set of states can be either a set of given known quantum states or can even include the unknown quantum states of the computer (or a section of it) at different past times.

The simulation is performed by applying chameleon gates, whose actions are determined by quantum states taking part in forming the Hamiltonian. The action of the chameleon gates are controlled by the state of some qubit ancilla. The 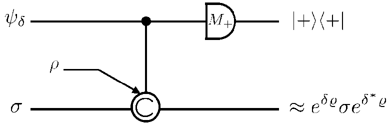 FIG. 3. SBQC circuit for simulating the dynamics generated by *H = hρ* on the simulator state, i.e., *e^{δρ}σe*^{*δ**}*^{ρ}.*
final result is obtained by post-selection of the result of the measurements on the ancilla.

In the following we show a step-by-step simulation of the dynamics generated by two classes of Hamiltonians. We first consider a *given* Hamiltonian *H(t)* which is *known* during the evolution. Next we consider a more general case, where *H* is a function of the instantaneous or the past states of the target system (which is here the simulator system) and hence it is *a priori unknown.* We denote the states of the simulator with "σ" to distinguish it from the states "p" of the resource systems used for SBQC.

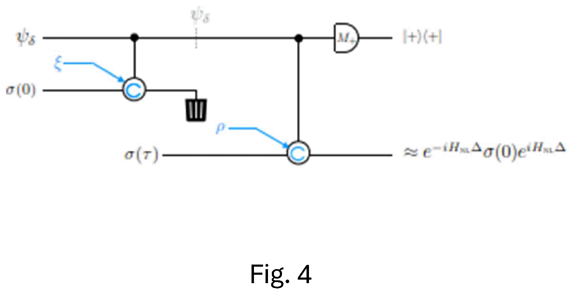

*State-independent Hamiltonians.-The* SBQC method for a *known* Hamiltonian simulation consists of the following steps:
(**I**) *Decomposition of H in terms of quantum states:* A set of density matrices {*ρⱼ*} is chosen such that we can expand $H = {\sum }_{j} {h}_{j} {ρ}_{j} ,$ (8) where *hⱼ* are scalar coefficients and in general can be complex numbers. The set {*ρⱼ*} need not be complete or independent and can be chosen based on the ability to prepare particular quantum states in the lab.
**(II)** *Trotter-Suzuki expansion:* The evolution operator, generated by *H,* is given by *U = e^{-itΣⱼhⱼρⱼ} .* Using the Trotter-Suzuki expansion [4] we break down U into a concatenation of factors with a single density matrix (i.e., state) *ρⱼ* such that $U = {\left({\prod }_{j} {e}^{{δ}_{j} {ρ}_{j}}\right)}^{n} + O \left({t}^{2}/n\right) ,$ (9) where *δⱼ* = -*ithⱼ*/*n, with n* ≫ 1 and |*δⱼ*| « 1. This implies that to simulate U it suffices to generate terms of the form *e^{δρ}.*
**(III)** *Exponentiation of density matrix:* To simulate the evolution *e^{δρ}* on a quantum system with the initial state *σ*, we apply the following steps:
   (a) Prepare a control qubit *ψ_{δ}* [Eq. (2)] with *δ = ith*/*n*. 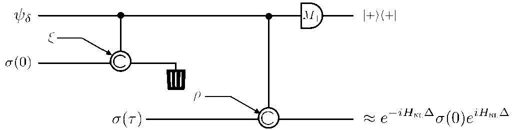 FIG. 4. State-based quantum circuit for simulation of the dynamics generated by the nonlinear Hamiltonian (13). For the relation between the parameters *δ* and Δ see the main text.
   (b) Apply a chameleon gate *C_{ρ}* on the control qubit and the simulator (target) state, leading to $\begin{matrix}{C}_{ρ} \left[{ψ}_{δ}⊗σ\right] = \left|0\right〉 \left〈0\right| ⊗ σ + δ \left|1\right〉 \left〈0\right| ⊗ ρσ + {δ}^{*} \left|0\right〉 \left〈1\right| ⊗ σρ \\ + {\left|δ\right|}^{2} \left|1\right〉 \left〈1\right| ⊗ ρ ,\end{matrix}$ (10)
   (c) Perform a measurement on the control qubit in the {|±)} basis (eigenbasis of the X-Pauli operator) and post select |+〉. That is, apply *M*₊[∘] = *P*₊∘*P*₊*,* where *P*₊ = |+〉〈+|. Thus, we obtain $\begin{matrix}{M}_{+} \left[{C}_{ρ}\left[{ψ}_{δ}⊗σ\left(0\right)\right]\right] = \left|+\right〉 \left〈+\right| ⊗ \left(σ\left(0\right)+δρσ+{δ}^{*}σ\left(0\right)ρ+{\left|δ\right|}^{2}ρ\right) , \\ \approx {e}^{δρ} σ \left(0\right) {e}^{{δ}^{*} ρ} .\end{matrix}$ (11) Figure 3 shows the corresponding SBQC circuit.

It is evident that to go further in time, we need to repeat similar simulation steps applied on the output simulator state of this step.

*State-dependent Hamiltonians.*-Consider a class of state-dependent Hamiltonians *H*(*t*) similar to the one in Eq. (8) with the following specific form for state-dependent couplings: ${h}_{j} \left(σ\left(t-τ\right)\right) = {c}_{j} Tr \left[{ξ}_{j}σ\left(t-τ\right)\right] ,$ (12) where *cⱼ* is a constant real number, *ξⱼ* is a given constant trace-unity positive operator, and *σ*(*t* - *τ*) is the delayed state of the simulator system *at t* - *τ.* To simulate the dynamics generated by such Hamiltonians using the Trotter-Suzuki expansion, it suffices to simulate the dynamics generated by terms of the form ${H}_{NL} = c Tr \left[ξσ\left(t-τ\right)\right] ρ .$ (13)

For simulating such delay systems, we need to know not only the initial state *σ*(0) but also *σ*(*t*) for all times *s* in the interval 0 ≤ *s* ≤ *τ*. With this information, we perform the following steps to simulate the evolution of the system which is in the state *σ*(*τ*) into the next time step *τ+*Δ, where Δ « *τ*:
(a) Simulation steps are akin to the case of state-independent Hamiltonian, but with a subtle difference in its (III) (a) step. Here the coefficients of the needed state of the control qubit depend on the state of the simulator at past times: |*ψ̃_{δ}*〉 = |0〉+*ξ*Tr[*ξσ*(0)]|1〉, where *δ =* -*ic*Δ and |δ| ≪ 1. To prepare such a control qubit state, we perform the following steps:
   (i) Prepare a control qubit in the state *ψ_{δ}.*
   (ii) Apply a chameleon gate *C_{ξ}* on the control qubit and a copy of the simulator state at the initial time: $\begin{matrix}{C}_{ξ} \left[{ψ}_{δ}⊗σ\left(0\right)\right] = \left|0\right〉 \left〈0\right| ⊗ σ \left(0\right) + δ \left|1\right〉 \left〈0\right| ⊗ ξσ \left(0\right) \\ + {δ}^{*} \left|0\right〉 \left〈1\right| ⊗ σ \left(0\right) ξ + {\left|δ\right|}^{2} \left|1\right〉 \left〈1\right| ⊗ ξ .\end{matrix}$ (14)
   (iii) Trace out the target system to find an updated qubit state ${Tr}_{T} \left[{C}_{ξ}\left[{ψ}_{δ}⊗σ\left(0\right)\right]\right] = {{ψ}^{˜}}_{δ} + O \left({δ}^{2}\right) ,$ (15) where *Ψ̃_{δ}* = |*Ψ̃_{δ}〉〈Ψ̃_{δ}*|.
      Now that we have prepared the suitable control qubit state, we follow similar steps as the state-independent case for the rest of the simulation process.
(b) Apply a chameleon gate *C_{ρ}* on the updated control qubit and a copy of the simulator state at time *τ*, i.e., *σ*(*τ*): $\begin{matrix}{C}_{ρ} \left[{{ψ}^{˜}}_{δ}⊗σ\left(τ\right)\right] = \left|0\right〉 \left〈0\right| ⊗ σ \left(τ\right) \\ + \left(δTr\left[{ξσ}_{0}\right]\left|1\right〉\left〈0\right|⊗ρσ\left(τ\right)+h.c\right) + O \left({δ}^{2}\right) .\end{matrix}$ (16)
(c) Perform a measurement on the control qubit in the {|±)} basis and post select |+〉: $\begin{matrix}{M}_{+} \left[{C}_{ρ}\left[{{ψ}^{˜}}_{δ}⊗σ\left(τ\right)\right]\right] \\ = \left|+\right〉 \left〈+\right| ⊗ σ \left(τ\right) + δ Tr \left[{ξσ}_{0}\right] \left[ρ,σ\left(τ\right)\right] + O \left({δ}^{2}\right) \\ \approx \left|+\right〉 \left〈+\right| ⊗ {e}^{- {iH}_{NL} Δ} σ \left(τ\right) {e}^{{iH}_{NL} Δ} .\end{matrix}$ (17) See Fig. 4 for the related SBQC circuit.

[1] M. A. Nilsen and I.L. Chuang, Quantum Computation and Quantum Information (Cambridge University Press, Cambridge, 2010)
[2] X.-Q. Zhou, T.C. Ralph, P. Kalasuwan, M. Zhang, A. Peruzzo, B. P. Lanyon, and J. L. O'Brien, Adding contorl to arbitrary unknown quantum operations, Nat. Commun. 2, 413 (2011).
[3] F. Wilczek and A. Zee, Appearance of Gauge Structure in Simp[le Dynamical Systems, Phys. Rev. Lett. 52, 2111 (1984).
[4] S. Lloyd, Universal quantum simulators, Science 273, 1073 (1996).

This disclosure describes a quantum processing element, comprising a quantum control system in a control state (ψ_{δ}), a quantum signal system and a quantum target system in a target state (σ). The quantum processing element is configured to apply, conditioned on the control state (ψ_{δ}), an operation to the quantum target system. The quantum signal system comprises a quantum state (p), and the operation applied by the quantum processing element to the quantum target system is dictated by said quantum state (p).

The quantum signal system may be in the quantum state (p).

Optionally, the quantum control system and the quantum target system and the quantum signal system may be qubits.

The quantum processing element may be configured to implement a controlled-swap gate.

The quantum signal system may be distinct from the quantum control system and the quantum target system.

The quantum state (p) may depend on a target state (σ) of the quantum target system at an earlier point in time.

This disclosure also describes a quantum processing unit which comprises the quantum processing element.

This disclosure also describes a quantum circuit for executing a unitary or nonunitary quantum processing element. The quantum circuit is configured to:
- provide a quantum control system in a control state (Ψ_{δ}) and a quantum target system in a target state (σ),
- provide a quantum signal system in a quantum state (ρ), and
- apply an operation to the quantum target system, conditioned on the control state (ψ_{δ}).
The operation may be dictated by the quantum state (ρ).

This disclosure also describes a method of operating a quantum circuit, comprising:
- providing a quantum control system in a control state (ψ_{δ}) and a quantum target system in a target state (σ),
- providing a quantum signal system in a quantum state (ρ), and
- applying an operation to the quantum control system, quantum signal system and the quantum target system.

The operation may be a controlled-swap which applies a swap gate on the quantum signal system (ρ) and the quantum target system (σ) conditioned on the control state (ψ_{δ}).

This disclosure also describes a quantum processing unit configured to perform the method.

This disclosure also describes a computer program product comprising instructions which, when executed by a computer, cause the computer to perform the method. This disclosure also describes a computer-readable medium comprising instructions which, when executed by a computer, cause the computer to perform the method.

As illustrated schematically in Figure 1, the operation performed by the quantum gate may be understood by analogy with a controllable knob. In conventional parameter-controlled quantum gates, such a knob corresponds to a classical parameter that selects a gate action based on the value of the parameter. In the present quantum gate, this role is instead played by a quantum state, which participates in the operation of the circuit and determines the operation applied by the gate to the target system. Different quantum states used in this role give rise to different effective gate actions, such that the behaviour of the gate is not fixed in advance but is dynamically influenced by the quantum state itself. The term "quantum knob" is used herein as an explanatory concept to emphasize this state-dependent operational behaviour and does not imply the presence of a separate physical control element.

In operation, the quantum processing element and/or quantum circuit may apply a state-dependent gate action without requiring prior knowledge of the quantum state that influences the operation, since the quantum state is used directly within the circuit to determine the applied operation (rather than being first identified or classically parametrized).

Section II above illustrates how the disclosed state-based quantum gates may be employed in quantum-computational tasks, such as the simulation of quantum dynamics, without implying that such tasks are required for or limit the invention.

As used herein, the term 'quantum processing element' refers to any functional or physical component, circuit, or system configured to manipulate quantum information, including but not limited to the state-based quantum gate architectures, quantum circuits, and information processors described in the embodiments below.

## Claims

1. A quantum processing element, comprising
- a quantum control system in a control state (ψ_{δ}),
- a quantum signal system,
- a quantum target system in a target state (σ),
wherein the quantum processing element is configured to apply, conditioned on the control state (ψ_{δ}), an operation to the quantum target system,
and the quantum signal system comprises a quantum state (ρ), and the operation applied by the quantum processing element to the quantum target system is dictated by said quantum state (ρ).

2. A quantum processing element according to claim 1, wherein the quantum control system and the quantum target system and the quantum signal system are qubits.

3. A quantum processing element according to any preceding claim, wherein the quantum processing element is configured to implement a controlled-swap gate.

4. A quantum processing element according to any preceding claim, wherein the quantum signal system is distinct from the quantum control system and the quantum target system.

5. A quantum processing element according to any preceding claim, wherein the quantum state (ρ) depends on a target state (σ) of the quantum target system at an earlier point in time.

6. A quantum processing unit comprising a quantum processing element according to any preceding claim.

7. A quantum circuit for executing a unitary or nonunitary quantum processing element, wherein the quantum circuit is configured to:
- provide a quantum control system in a control state (ψ_{δ})and a quantum target system in a target state (σ),
- provide a quantum signal system in a quantum state (ρ), and
- apply an operation to the quantum target system, conditioned on the control state (ψ_{δ}), wherein the operation is dictated by the quantum state (ρ).

8. A method of operating a quantum circuit, comprising:
- providing a quantum control system in a control state (ψ_{δ)} and a quantum target system in a target state (σ),
- providing a quantum signal system in a quantum state (ρ), and
- applying an operation to the quantum control system, quantum signal system and the quantum target system.

9. A method according to claim 8, wherein the operation is a controlled-swap which applies a swap gate on the quantum signal system (ρ) and the quantum target system (σ) conditioned on the control state (ψ_{δ}).

10. A quantum processing unit configured to perform the method of any of claims 8-9.

11. A computer program product comprising instructions which, when executed by a computer, cause the computer to perform the method of any of claims 8-9.

12. A computer-readable medium comprising instructions which, when executed by a computer, cause the computer to perform the method of any of claims 8-9.
